## Europäisches Patentamt
## European Patent Office
## Office européen des brevets

(19)

(11) Veröffentlichungsnummer: **0 162 318**
**B1**

(12) **EUROPÄISCHE PATENTSCHRIFT**

(45) Veröffentlichungstag der Patentschrift:
04.11.87

(51) Int. Cl.⁴: **B 65 G 65/28**

(21) Anmeldenummer: **85104949.4**

(22) Anmeldetag: **24.04.85**

(54) **Mischbettanlage für Schüttgut.**

(30) Priorität: **18.05.84 DE 3418433**

(43) Veröffentlichungstag der Anmeldung:
**27.11.85 Patentblatt 85/48**

(45) Bekanntmachung des Hinweises auf die Patenterteilung:
**04.11.87 Patentblatt 87/45**

(84) Benannte Vertragsstaaten:
**FR GB IT NL**

(56) Entgegenhaltungen:
**EP-A-0 098 227**
**DE-C-367 590**
**DE-U-7 707 677**
**DE-U-7 904 817**

(73) Patentinhaber: **Fried. Krupp Gesellschaft mit beschränkter Haftung, Altendorfer Strasse 103, D-4300 Essen 1 (DE)**

(72) Erfinder: **Bojdys, Marjan, Niederrheinallee 295, D-4133 Neukirchen- Vluyn (DE)**

LIBER, STOCKHOLM 1987

## Beschreibung

Die Erfindung betrifft eine Mischbettanlage nach dem Oberbegriff des Patentanspruchs 1. Derartige Mischbettanlagen dienen dazu, Schüttgut, das hinsichtlich seiner chemischen Zusammensetzung und/oder hinsichtlich seiner Korngröße in unregelmäßiger Zusammensetzung anfällt, nach der Einlagerung in möglichst gleichmäßig vermischter Zusammensetzung zur Weiterverarbeitung abzugeben.

Aus dem Artikel "Neuartiges Eimerkettenaustraggerät mit Tiefschnittverfahren zur Vergleichmäßigung von Rohwaschkohle in Mischbetten" von Dr.-Ing. T. Bahke in der Z. Aufbereitungs-Technik 1982, Heft 4, S. 178-187, ist eine Kreismischbettanlage bekannt, die zur Vergleichmäßigung der Zusammensetzung von Rohwaschkohle dient. Bei dieser bekannten Anlage wird die Rohwaschkohle von den Eimern eines Eimerkettenaustraggerätes am Boden des Kreismischbettes erfaßt und zu dessen Zentrum transportiert, wo sie in einen Tiefbunker entleert wird, von dem sie mit einem in einem tunnelartigen Bunker angeordneten Abzugsband vom Mischbett abtransportiert wird.

Der Bunker der bekannten Anlage stellt nicht nur einen erheblichen Investitionsaufwand dar, bei der Errichtung des Bunkers kann es darüber hinaus erforderlich werden, das Grundwasser im Bereich der Bauarbeiten abzusenken, sowie besondere Betonsorten bei der Errichtung des Bunkers zu verwenden. Als ein weiterer Nachteil erweist es sich bei der bekannten Mischbettanlage, daß das Schüttgut deutlich unterhälb des Bodens des Mischbettes abgeworfen werden muß. Dadurch findet eine starke Kornzerkleinerung des Schüttgutes statt, die in bestimmten Fällen absolut unerwünscht ist. Außerdem ist für den Weitertransport des Schüttgutes, durch die Anordnung des Tiefbunkers bedingt, eine Höhendifferenz zu überwinden, die einen erheblichen Energie- bzw. Leistungsaufwand erfordert.

Der Erfindung liegt die Aufgabe zugrunde, eine Kreismischbettanlage zu schaffen, die ohne aufwendige Tiefbauarbeiten auskommt.

Diese Aufgabe wird durch die im Patentanspruch 1 gekennzeichneten Merkmale gelöst. Es ist nun möglich, die Ausstapelbandanlage nach Eintreffen der Einzelteile am Einsatzort schnell und unabhängig von der Fertigstellung von Tiefbauarbeiten zu montieren.

Zweckmäßige Weiterbildungen der Erfindung sind in den Unteransprüchen beschrieben. So wird das Schüttgut bei einer Ausbildung der Mischbettanlage nach Anspruch 2 in besonders schonender Weise auf das Abzugsband übergeben, ohne betriebsbedingte Höhenunterschiede überwinden zu müssen.

Bei der Ausbildung des Ausstapelbandes nach Anspruch 3 kann ein großer Förderquerschnitt verwirklicht werden.

Mit der Ausbildung der Ausstapelbandanlage nach Anspruch 4 ist es möglich, besonders einfache Rollenanordnungen zur Abstützung des Ausstapelbandes zu verwenden.

Wenn das Ausstapelband mit umschaltbaren Antrieben nach Anspruch 5 ausgerüstet wird, kann das Schüttgut entlang des jeweils kürzeren Bogenstücks auf dem Ausstapelband transportiert werden, wodurch eine Senkung des Leistungsbedarfs erreicht wird. Wenn die Antriebe des Ausstapelbandes gemäß Anspruch 6 abhängig von der Stellung des Rückladegerätes steuerbar sind, so kann dieser Vorteil automatisch herbeigeführt werden.

Bei der Ausbildung der Mischbettanlage nach Anspruch 7 kann die Ausstapelanlage durch handelsübliche Förderbänder gebildet werden, wobei sich eine Herabsetzung des Leistungsbedarfs einstellt, wenn die Förderbänder nach Anspruch 8 in zwei Gruppen unterteilt werden.

Ausführungsbeispiele des Gegenstandes der Erfindung sind in der Zeichnung dargestellt und werden im folgenden näher erläutert. Es zeigen:

Fig. 1 eine Kreismischbettanlage in einem schematisierten Querschnitt,

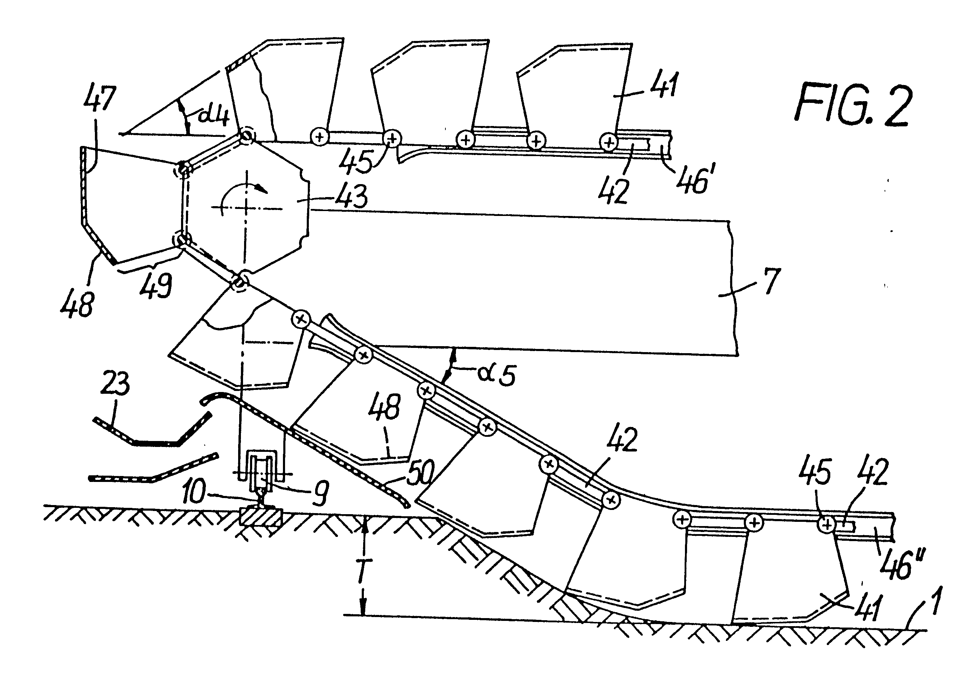

Fig. 2 das Rückladegerät der Mischbettanlage in einer teilweise freigelegten, auszugsweisen Seitenansicht,

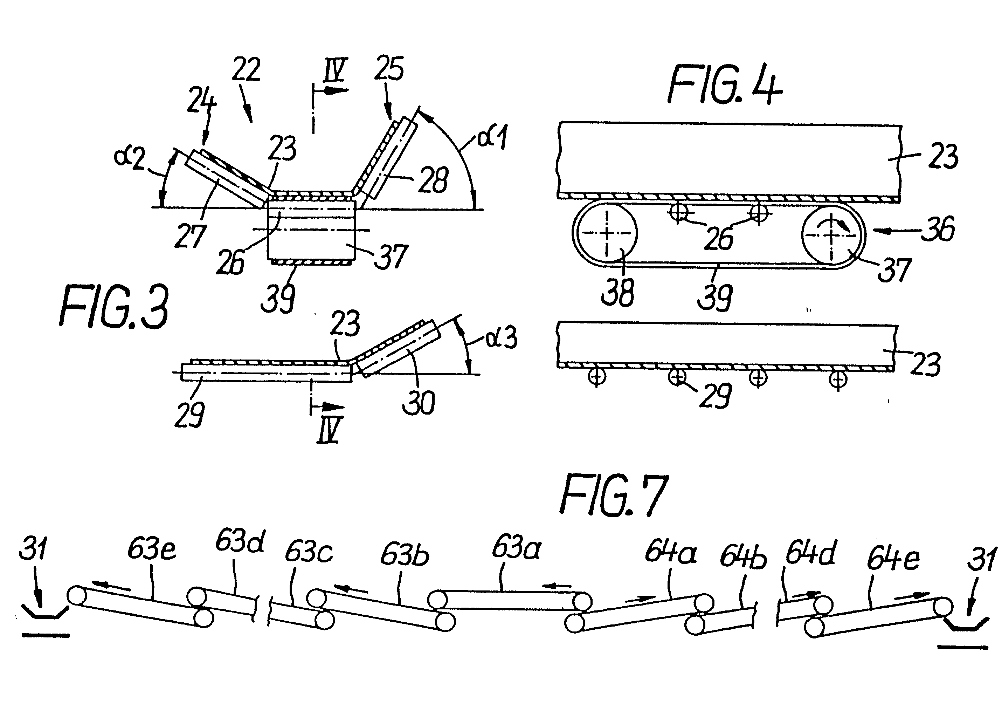

Fig. 3 ein muldenförmiges Ausstapelband in einem schematisierten Querschnitt,

Fig. 4 das Ausstapelband in einem auszugsweisen Längsschnitt längs der Linie IV-IV in Fig. 3,

Fig. 5 ein flaches Ausstapelband in einem schematisierten Querschnitt,

Fig. 6 eine Ausstapelbandanlage mit mehreren Einzelbändern in einer Draufsicht und

Fig. 7 die Ausstapelbandanlage nach Fig. 6 in einer abgewickelten Darstellung.

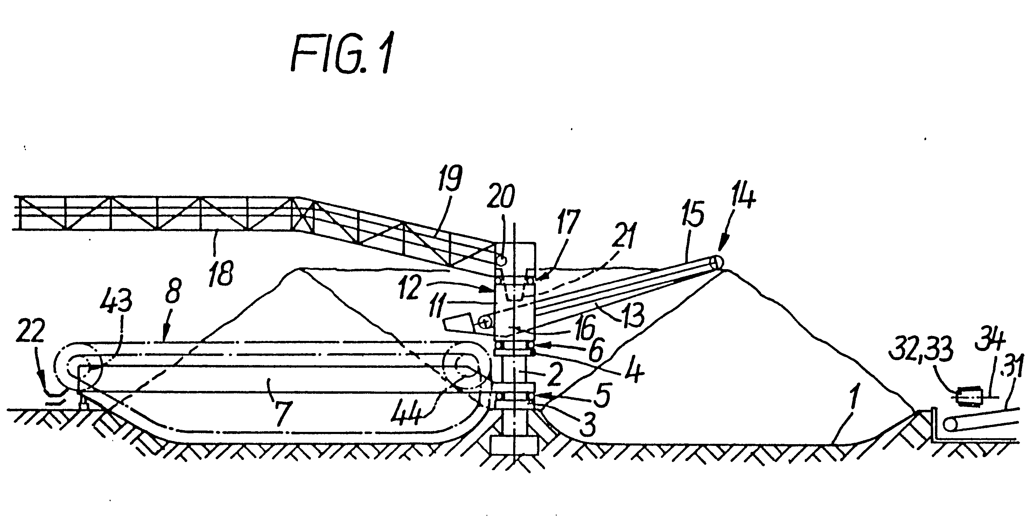

Die Mischbettanlage nach Fig. 1 weist einen Rundlagerplatz bzw. ein Kreislagermischbett 1 auf, dessen Boden um das Maß T unter dem Mischbettrand liegt. In der Mitte des Kreislagermisch ettes 1 befindet sich eine Zentral- oder Rundsäule 2 mit zwei flanschartigen Tragringen 3 bzw. 4, die jeweils eine Kugeldrehverbindung 5 bzw. 6 aufnehmen.

An der einen Kugeldrehverbindung 5 ist das eine Ende der Brücke 7 eines Rückladegerätes 8 gelagert. Das andere Ende der Brücke 7 ist über Antriebsräder 9 auf um das Kreislagermischbett 1 angeordneten Schienen 10 fahrbar abgestützt.

Auf der anderen Kugeldrehverbindung 6 ist eine mit zwei Seitenwänden 11 versehene Stützkonstrukticn 12 drehbar gelagert. Zwischen den Seitenwänden 11 ist die Tragkonstruktion 13 eines Absetzers 14 mit einem Abwurfband 15 um eine waagerechte Achse 16 schwenkbar angeordnet.

Auf der Stützkonstruktion 12 befindet sich eine weitere Kugeldrehverbindung 17, auf der sich die Tragkonstruktion 18 eines von außen in das Zentrum des Kreislagermischbettes 1 geführten Brückenbandes 19 abstützt. Unter der Umlenk- oder Abgabetrommel 20 des Brückenbandes befindet sich eine Aufgabeschurre 21, die das ankommende Schüttgut auf das Band 15 des Absetzers 14 weiterleitet.

Um das Kreislagermischbett 1 ist eine Ausstapelbandanordnung 22 angeordnet, die - in der Draufsicht gesehen - kreisrund ausgebildet ist. Die Bandanordnung 22 weist ein Ausstapelband 23 auf, dessen Länge am Außenumfang 24 entsprechend länger ausgebildet ist als die Länge an dessen Innenumfang 25. Das Obertrum des Ausstapelbandes 23 wird durch mittige Tragrollen 26 und durch seitliche Tragrollen 27, 28 gestützt, wobei die Tragrollen 28 am Innenumfang des Ausstapelbandes 23 unter einem Winkel $\alpha_1$ geneigt sind, der größer ist als der Winkel $\alpha_2$, um den die Tragrollen 27 am Außenumfang des Ausstapelbandes 23 geneigt sind. Das rücklaufende Untertrum des Ausstapelbandes 23 wird wiederum von Tragrollen 29, 30 gestützt, wobei die Tragrollen 30 am Innenumfang des Ausstapelbandes 23 unter einem Winkel $\alpha_3$ geneigt sind.

Über einem von dem Kreislagermischbett 1 wegführenden Abzugsband 31 wird das Ausstapelband 23 jeweils um zwei konische Umlenktrommeln 32 und 33 in seine Kreisbahn zurück umgelenkt. Die Achsen 34 der Umlenktrommeln 32, 33 sind im wesentlichen radial zur Säule 2 bzw. zum Zentrum des Kreislagermischbettes 1 ausgerichtet. Zwischen den beiden Umlenktrommeln 32, 33 ist ein Zwischenraum, durch den das Schüttgut beim Verlassen des Ausstapelbandes 23 auf das Abzugsband 31 gelangen kann. Dabei ist eine Umlenktrommel 32 als Antriebstrommel und die andere Umlenktrommel 33 als Spanntrommel ausgebildet.

Außer durch die eine Umlenktrommel (32) wird das Ausstapelband 23 noch durch weitere Antriebe 36 angetrieben, die gleichmäßig über dessen Umfang verteilt sind und die jeweils aus einer Antriebstrommel 37 und aus einer Spanntrommel 38 bestehen, die beide von einem umlaufenden Gurt oder Band 39 umspannt sind. Das Ausstapelband 23 liegt auf dem Gurt 39 auf und wird durch Reibungsschluß von diesem mitgenommen. Im Bereich der zusätzlichen Antriebe 36 sind die Tragrollen 26 unterhalb des Obertrums des Gurtes 39 angeordnet.

Das Rückladegerät 8 weist eine mit Eimern 41 versehene, umlaufende Kette 42 auf, die um zwei Umlenkturasse 43, 44 umgelenkt und ober- und unterhalb der Brücke 7 über Rollen 45 in Führungsschienen 46', 46'' geführt ist.

Die Eimer 41 weisen ein im wesentlichen parallel zur Kette 42 verlaufendes Fuß- oder Unterblech 47 auf sowie eine dazu unter einem Winkel $\alpha_4$ geneigte Rückwand 48 und eine zwischen der Rückwand 48 und der Kette 42 befindliche rückwärtige Öffnung 49. Vor dem Umlenkturas 43 ist die Führungsschiene 46'' unter einem Winkel $\alpha_5$ gegen die Horizontale geneigt, der kleiner oder gleich dem Winkel $\alpha_4$ ist so daß die Rückwand 48 in dem Bereich vor dem Umlenkturas 43 in etwa waagerecht ausgerichtet ist und dem in dem Eimer 41 befindlichen Schüttgut einen tragfähigen Halt gibt.

Außerhalb des Mischbettes 1 ist im Bereich des schrägen Verlaufs der Führungsschienen 46'' eine Schurre 50 mit der Brücke 7 verbunden. Im Bereich des Umlenkturas 43 fällt unten auf das Ausstapelband 23. Das zwischen den einzelnen Eimern 41 befindliche Schüttgut wird entlang der Schurre 50 geschoben und am Ende der Schurre 50 auf das Ausstapelband 23 übergeben.

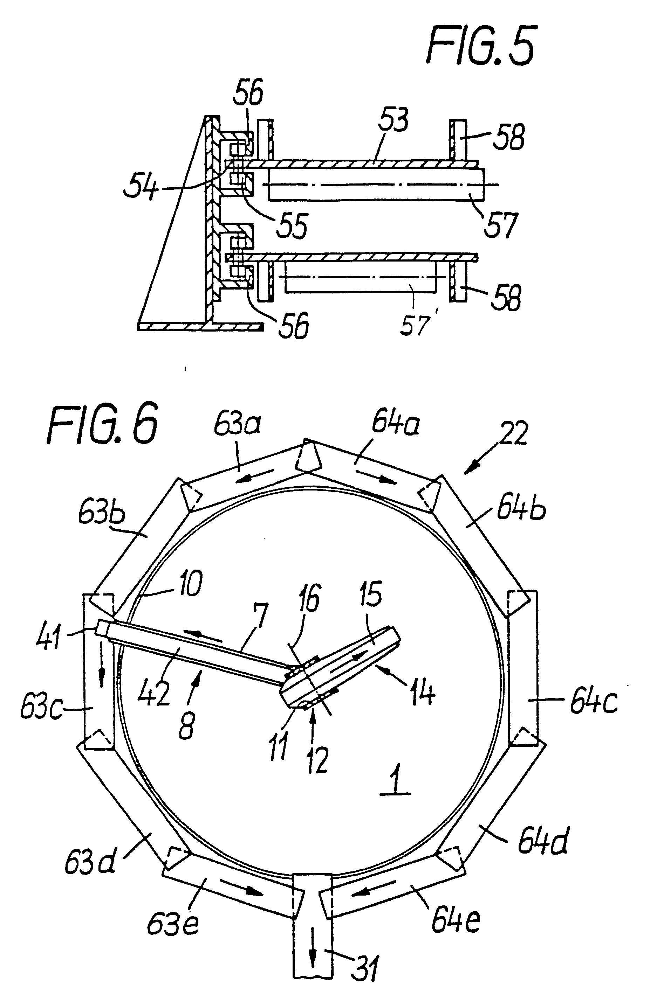

Bei einem anderen Ausführungsbeispiel (vgl. Fig. 5) weist die Ausstapelbandanlage 22 ein im wesentlichen waagerechtes Ausstapelband 53 auf, das an seinem Aufenumfang 54 an der Ober- und an der Unterseite mit einer Vielzahl von Druckrollen 55 versehen ist, die sich gegen Schienen 56 abstützen, die um das Kreislagermischbett 1 angeordnet sind. Das Ausstapelband 53 ist lediglich auf waagerechten Trag- oder Stützrollen 57, 57' abgestützt und im übrigen, wie bei dem Ausführungsbeispiel gemäß Fig. 1 über dem Abzugsband 31 um konische Umlenktrommeln 32, 33 umgelenkt und mit zusätzlichen Antrieben 36 versehen. Zur seitlichen Begrenzung des Schüttgutes weist das Ausstapelband 53 wellenförmig ausgebildete elastische Längswülste 58 auf, die ein Umlenken des Bandes 53 mit vollziehen.

Bei dem Ausführungsbeispiel gemäß Fig. 6 und 7 besteht die Ausstapelbandanordnung 22 aus zwei Gruppen von jeweils einer Vielzahl von Förderbändern 63a...63e bzw. 64a...64e, wobei die Gruppen jeweils an der dem Abzugsband 31 gegenüberllegenden Stelle beginnen. Die Abwurfstelle des jeweils letzten Bandes der beiden Gruppen 63e bzw. 64e befindet sich über dem Abzugsband 31. Je nach Stellung des Rückladegerätes wird das Schüttgut über die zum Abzugsband 31 führenden Bänder 63a...63e oder 64a...64e transportiert.

Zur besseren Angleichung der Bandgruppen an eine Kreisform können die einzelnen Bänder 63a...63e bzw. 64a...64e jeweils auch bogenförmig ausgebildet sein.

**Patentansprüche**

1. Mischbettanlage zur Vergleichmäßigung von Schüttgut, bestehend aus einem Kreislagermischbett (1), einem auf einer zentrisch in dem Kreislagermischbett angeordneten Säule (2) drehbar gelagerten Absetzer (14), einem von außen in das Zentrum des Kreislagermischbettes (1) führenden Brückenband (19), einem ebenfalls an der Säule (2) drehbar gelagerten Rückladegerät (8) und einem von dem Kreislagermischbett (1) wegfördernden Abzugsband (31),
dadurch gekennzeichnet,
daß das Schüttgut von dem Rückladegerät (8) zu dem Abzugsband (31) über eine Ausstapelbandanlage (22) geführt wird, die um das Kreislagermischbett (1) herum angeordnet ist und die über dem Abzugsband (31) eine Abwurfstelle (32, 33) aufweist.

2. Mischbettanlage nach Anspruch 1, dadurch gekennzeichnet, daß die Ausstapelbandanlage (22) aus einem kreisförmig um das Kreislagermischbett (1) herum angeordneten Ausstapelband (23, 53) gebildet wird, das an seinem Außenumfang (24, 54) eine größere Länge aufweist als an seinem Innenumfang (25) und das an der Abwurfstelle um zwei Umlenktrommeln (32, 33) umgelenkt wird, deren Drehachse (34) im wesentlichen radial zur zentrischen Säule (2) des Kreislagermischbettes (1) ausgerichtet ist.

3. Mischbettanlage nach Anspruch 2, dadurch gekennzeichnet, daß das Ausstapelband (23) an der Abwurfstelle um konische Umlenktrommeln (32, 33) umgelenkt und zwischen den Umlenktrommeln (32, 33) über Rollenanordnungen mit je einer mittigen waagerechten Rolle (26) und je einer äußeren schräggestellten Rolle (27, 28) geführt wird.

4. Mischbettanlage nach Anspruch 2, dadurch gekennzeichnet, daß das Ausstapelband (53) zwischen den Umlenktrommeln (32, 33) auf Rollenanordnungen abgestützt ist, die jeweils lediglich eine waagerechte Rollen (57; 57') aufweisen,

und daß das Ausstapelband (53) an seiner Außenkante (54) an jeder Seite eine Vielzahl von Druckrollen (55) aufweist, die sich an - bezogen auf die Mitte des Kreislagermischbettes (1) - kreisförmigen Führungsschienen (56) abstützen.

5. Mischbettanlage nach einem der Ansprüche 3 oder 4, dadurch gekennzeichnet, daß der bzw. die Antriebe (32, 37) für das Ausstapelband (23, 53) mit umschaltbarer Drehrichtung betreibbar sind.

6. Mischbettanlage nach Anspruch 5, dadurch gekennzeichnet, daß die Laufrichtung des Ausstapelbandes (23, 53) in Abhängigkeit von der Stellung des Rückladegerätes (8) steuerbar ist, und zwar derart, daß die Bogenlänge des Ausstapelbandes (23, 53) vom Rückladegerät (8) bis zum Abzugsband (31) kleiner ist als die halbe Umfangslänge des Ausstapelbandes (23, 53).

7. Mischbettanlage nach Anspruch 1, dadurch gekennzeichnet, daß die Ausstapelbandanlage (22) aus mehreren sich überlappenden Einzelbändern (63a...; 64a...) besteht, wobei die Endrolle eines jeden Bandes jeweils über der Anfangsrolle des - in Förderrichtung gesehen - folgenden Einzelbandes angeordnet ist und wobei die Endrolle des - wiederum in Förderrichtung gesehen - letzten Einzelbandes über dem Abzugsband (31) angeordnet ist.

8. Mischbettanlage nach Anspruch 7, dadurch gekennzeichnet, daß die Ausstapelbandanlage (22) aus zwei sich über jeweils seine halbe Umfangslänge erstreckenden Gruppen von Einzelbändern (63a...63e; 64a...64e) besteht, deren Überlappungsrichtung jeweils auf das Abzugsband (31) gerichtet ist.

## Claims

1. A blending bed plant for the homogenization, of bulk material, comprising: a circular storage blending bed (1); a spreader (14) rotatably mounted on a column (2) disposed centrally in the circular storage blending bed (1); a bridge belt (19) extending from outside into the centre of the circular storage blending bed (1); a reclaiming apparatus (8) also pivotably mounted on the column (2); and a removal belt (31) conveying away from the circular storage blending bed (1), characterised in that the bulk material is passed from the reclaiming apparatus (8) to the removal belt (31) via an unstacking belt installation (22) which is disposed around the circular storage blending bed (1) and has a discharge place (32, 33) above the removal belt (31).

2. A blending bed plant according to claim 1, characterised in that the unstacking belt installation (22) is formed by an unstacking belt (23, 53) which is arranged in a circle around the circular storage blending bed (1), has a greater length at its outer periphery (24, 54) than at its inner periphery (25) and is deflected at the discharge place around two deflecting drums (32, 33) whose axis of rotation (34) is aligned substantially radially in relation to the central column (2) of the circular storage blending bed (1).

3. A blending bed plant according to claim 1, characterised in that the unstacking belt (23) is deflected at the discharge place around conical deflecting drums (32, 33) and guided between the deflecting drums (32, 33) via roller arrangements each having a central horizontal roller (26) and an outer inclined roller (27, 28).

4. A blending bed plant according to claim 2, characterised in that the unstacking belt (53) is borne between the deflecting drums (32, 33) on roller arrangements each of which have solely horizontal rollers (57; 57'), and the unstacking belt (53) has at its outer edge (54) on each side a plurality of thrust rollers (55) which bear, referred to the centre of the circular storage blending bed (1), against circular guide rails (56).

5. A blending bed plant according to one of claims 3 or 4, characterised in that the or each drive (32, 37) for the unstacking belt (23, 53) can be operated with a reversed direction of rotation.

6. A blending bed plant according to claim 5, characterised in that the direction in which the unstacking belt (23, 53) travels can be so controlled in dependence on the position of the reclaiming apparatus (8) that the arc length of the unstacking belt (23, 53) from the reclaiming apparatus (8) to the removal belt (31) is smaller than half the peripheral length of the unstacking belt (23, 53).

7. A blending bed plant according to claim 1, characterised in that the unstacking belt installation (22) comprises a number of overlapping individual belts (63e...; 64e...), the end roller of each belt being disposed, viewed in the conveying direction, above the first roller of the following individual belt, and the end roller of the last individual belt, viewed in the conveying direction, being desposed above the removal belt (31).

8. A blending bed plant according to claim 7, characterised in that the unstacking belt installation (22) comprises two groups of individual belts (63a...63e; 64a...64e) which each extend over half its peripheral length and the direction of overlap of each is directed towards the removal belt (31).

## Revendications

1. Installation à lit mixte pour uniformiser les matières en vrac, comportant un lit mixte circulaire de stockage (1), un déverseur (14) monté en rotation sur une colonne (2) disposée au centre du lit mixte circulaire de stockage (1), une bande transporteuse en pont (19) menant de l'extérieur vers le centre du lit mixte circulaire de stockage (1), un appareil de reprise sur stock (6) monté également en rotation sur la colonne (2), et une bande d'évacuation (31) partant du lit mixte circulaire de stockage (1), caractérisée en ce que les matières en vrac sont guidées de l'appareil de reprise sur stock (8) à la bande d'évacuation (31) par une installation à bande de dépilage (22) qui est disposée autour du lit mixte circulaire de stockage (1) et qui comporte un poste de déchargement (32, 33), au-dessus de la bande d'évacuation (31).

2. Installation à lit mixte selon la revendication 1, caractérisée en ce que l'installation à bande de dépilage (22) comporte une bande de dépilage (23, 53) disposée en cercle autour du lit mixte circulaire de stockage (1), dont la longueur sur son pourtour extérieur (24, 54) est supérieure à celle de son pourtour intérieur (25) et qui est déviée au point de déchargemant autour de deux tambours de renvoi (32, 33) dont l'axe de rotation (34) est sensiblement radial par rapport à la colonne (2) centrale du lit mixte cic\ulaire de stockage (1).

3. Installation à lit mixte selon la revendication 2, caractérisée en ce que la bande de dépilage (23) est déviée au point de déchargement autour de tambours de renvoi (32, 33) coniques et guidée entre les tambours de renvoi (32, 33) par des dispositifs à rouleaux comportant chacun un rouleau (26) horizontal central et un rouleau (27, 28) extérieur oblique.

4. Installation à lit mixte selon la revendication 2, caractérisée en ce que la bande de dépilage (53) prend appui entre les tambours de renvoi (32, 33) sur des dispositifs à rouleaux qui comportent chacun uniquement des rouleaux horizontaux (57, 57'), et en ce que la bande de dépilage (53) comporte sur son bord extérieur (54), de chaque côté, plusieurs rouleaux presseurs (55) qui prennent appui- par rapport au centre du lit mixte circulaire de stockage (1) - sur des rails de guidage 56 circulaires.

5. Installation à lit mixte selon l'une des revendications 3 ou 4, caractérisée en ca que le ou les mécanisme(s) d'entraînement (32, 37) de la bande de dépilage (23, 53) ont un sens de rotation commutable.

6. Installation à lit mixte selon la revendication 5, caractérisée en ce que le sens d'avance de la bande de dépilage (23, 53) peut être commandé, en fonction de la position de l'appareil de reprise sur stock (8), et ce, de telle sorte que la longueur d'arc de la bande de dépilage (23, 53) depuis l'appareil de reprise sur stock (8) jusqu'à la bande d'évacuation (31) soit inférieure à la moitié du périmètre de la bande de dépilage (23, 53).

7. Installation à lit mixte selon la ravendication 1, caractérisée en ce que l'installation à bande de dépilage (22) est constituée da plusieurs bandes (63a... 64a...) sa recouvrant, la rouleau terminal de chaque bande étant disposé au-dessus du rouleau initial de la bande suivante - vu dans le sens du transport - et la rouleau terminal de la dernière bande - toujours vu dans le sens du transport - étant disposé au-dessus de la bande d'évacuation (31).

8. Installation à lit mixte salon la revendication 7, caractérisée en ce que l'installation à bande de dépilage (22) est constituée de deux groupes de bandes (63a...63e; 64a... 64e) s'étendant chacun sur son demi-périmètre, dont le sens de recouvrement est dirigé dans chaque cas vers la bande d'évacuation (31).

# FIG.1

FIG. 2

FIG.3

FIG.4

FIG.7

FIG.5

FIG.6